# EUROPEAN PATENT SPECIFICATION

(11) **EP 2 497 838 B1**
(45) Date of publication and mention of the grant of the patent: **18.09.2013**
(21) Application number: 11002036.9
(22) Date of filing: 11.03.2011
(51) Int. Cl.: C13B 40/00, C13B 50/02, A23G 3/02

(54) **Apparatus for producing sugar cubes**
Vorrichtung zur Herstellung von Würfelzucker
Appareil de production de sucre en morceaux

(43) Date of publication of application: 12.09.2012
(73) Proprietor: GEA CFS Weert B.V., 6006 RV Weert (NL)
(72) Inventor: Hendriks, Peter Joseph, 6005 KJ Weert (NL)
(74) Representative: Wolff, Felix

(56) References cited:
- EP-A1- 0 036 241
- GB-A- 706 775
- GB-A- 931 269
- US-A- 3 005 420

## Description

The present invention relates to a sugar cube production apparatus comprising:
- a press for shaping a sugar mass in sugar cubes,
- a heating apparatus for heating and dehumidifying the sugar cubes,
- transportation means for transporting the sugar cubes from the press to the heating apparatus and from the heating apparatus to a packaging unit, which comprises at least one sugar cubes pick-up means, which intermittently picks up an array of sugar cubes, removes it from the transportation means and places it into a package.

Such an apparatus is for example known from EP0894871 B1. The apparatus described in this patent has however the deficiency, that the sugar cubes, not being picked up during one cycle, tend to turn over, particularly when their center of gravity is high.

It was therefore the objective of the present invention to provide a sugar cube production apparatus which does not comprise the deficiencies according to the state of the art.

This problem is attained by sugar cube production apparatus comprising:
- a press for shaping a sugar mass in sugar cubes,
- a heating apparatus for heating and dehumidifying the sugar cubes,
- transportation means for transporting the sugar cubes from the press to the heating apparatus and from the heating apparatus to a packaging unit, which comprises at least one sugar cubes pick-up means, which intermittently picks up an array of sugar cubes, removes it from the transportation means and places it into a package,
whereas the packaging unit comprises retention means placed in the vicinity of the first row of sugar cubes not being picked up during the respective cycle.

The present invention relates to a sugar cube production- and drying apparatus. In this apparatus, sugar particles are mixed with water and this sugar mass is then formed in a press in sugar cubes. These sugar cubes are subsequently discharged on a transportation means, for example a transportation belt, which transports the sugar cubes to a heating apparatus for heating the sugar cubes in a drying chamber, in order to evaporated the water content of the sugar cubes at least partially. The water vapor is removed from the drying chamber, for example, by ventilation of the drying chamber. Downstream from the heating apparatus, preferably a conditioning apparatus is positioned for cooling and dehumidifying the sugar cubes. Finally, the sugar cubes are packaged for example in boxes.

The packaging of the sugar cubes is carried out in a packaging unit, which comprises at least one, preferably numerous, sugar cube pick-up means, for example a gripper, each removing an array of sugar cubes from the transportation belt. Preferably, the sugar cube pick-up means comprises vacuum means, which attaches the sugar cubes to the sugar cube pick-up means. As soon as the sugar cube pick-up means are placed above a package into which the array of sugar cubes is inserted, the vacuum is released and the sugar cubes drop into the package. Normally, the sugar cube pick-up means pick up the sugar cubes intermittently. Thus, during one cycle, a certain row of sugar cubes is picked-up, transported to the package, released into the package and then the sugar cube pick-up means is transported back to the transportation belt, where they pick-up the next rows of sugar cubes. After the sugar cube pick-up means has transported the sugar cubes away, the remaining sugar cubes on the transportation belt, which is operated continuously, are moved forward, until they reach a mechanical stop. Here, the sugar cubes wait, until they are picked up.

According to the present invention, the packaging machine comprises retention means, which are placed in the vicinity of the first row of sugar cubes not being picked up during the respective cycle. These retention mean preferably avoid, that this row of sugar cube is lifted, at least beyond a certain degree, during the pick-up of the rows of sugar cubes being located downstream, relative to the transport direction of the transportation means, from the retention means. Additionally or alternatively the retention means can stabilize the sugar cubes in their respective position.

These retention mean can be for example vacuum means located below the transportation belts, which increase the adhesion force between the sugar cubes and the belt. This vacuum is turned on, when sugar cubes are removed from the transportation means and turned off, when the transportation means transport the sugar cubes forward.

In the prefer embodiment the retention means are placed above the first row of sugar cubes not being picked-up during the respective cycle. For example, the retention means is a strip, preferably a metal-strip, that extends preferably over the entire width of the transportation belt, at least over one row. This retention means can touch the sugar cubes. However, in a prefered embodiment, the retention means is placed slightly, for example less than a millimeter, above the row of sugar cubes. Preferably, the retention means placed above the sugar cubes is vertically displaceable. This is preferably done by a motor, more preferably by a servo motor. During pick-up of the rows of sugar cubes being located downstream from the retention means, the retention means are lowered so that they either touch or are in the intermediate vicinity of the row of sugar cubes not being picked up. As soon as this row of sugar cubes is transported forward, the retention mean is lifted in order to avoid contact between the sugar cubes, being transported forward, and the retention means.

In another preferred embodiment, the apparatus comprises a mechanical stop against which the rows of sugar cubes are pushed by the transportation means. This mechanical stop is displaced before and/or during the pickup of the sugar cubes by the pick-up means. Preferably, the mechanical stop is rotated away from the sugar cubes being picked up. The movement of the mechanical stop is carried out by a motor preferably by a servo motor.

A servo motor according to the present invention is a motor, that sends a signal to a control unit indicating its exact linear or rotational position. Thus, the control means of the inventive apparatus always knows the exact position of the respective driven part. An electrical motor has the advantage, that the motion of the sugar cube pick-up means can be synchronized with the motion of the retention means, the mechanical stop and/or, as later elaborated, side compression means.

Preferably the inventive apparatus comprises side compression means, which compact the rows of sugar cubes in their extension perpendicular to their transportation direction. According to the present invention, these compression means are driven by an electrical motor preferably also by a servo motor. Preferably, the apparatus comprise two compression means, which are driven by one motor. Preferably the motor drives an excenter. One side compression means is connected to the excenter, while the other side compression means is connected to a ring being located on the circumference of the excenter. As soon as the excenter rotates, both side compression means are easer pulled together or moved apart.

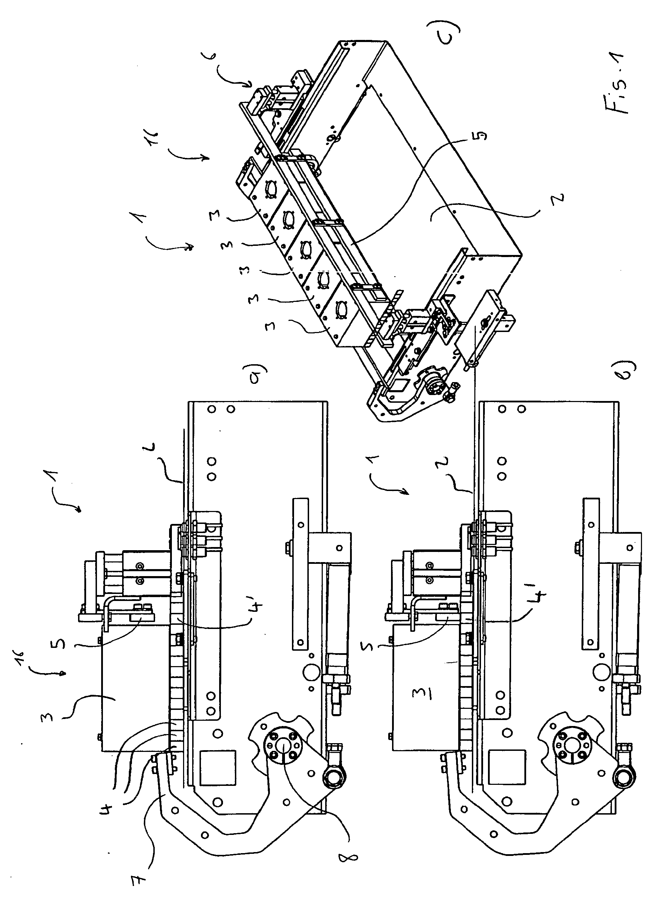

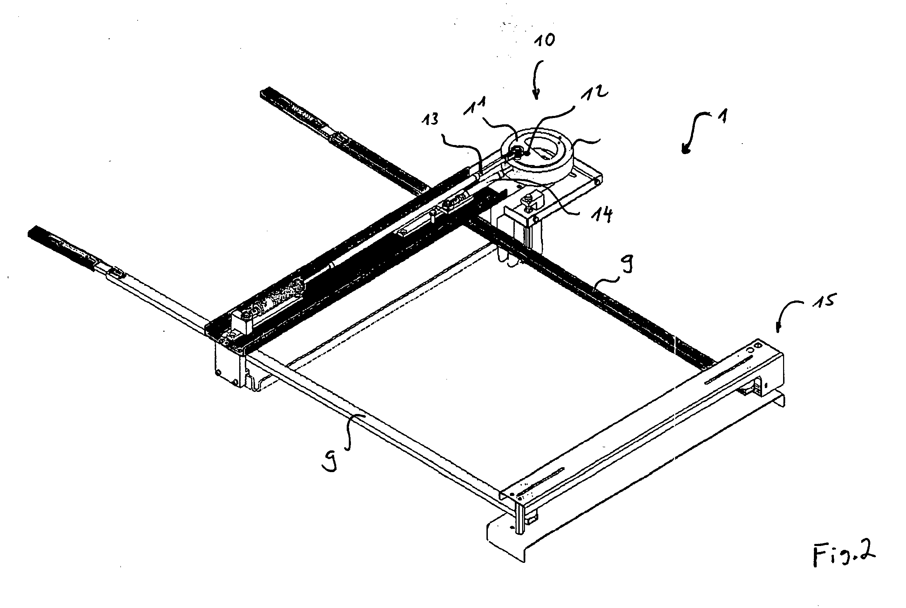

The invention is now explained according to figures 1 and 2. These explanations do not limit the scope of protection.
Figure 1 shows the inventive sugar cube production apparatus particularly its packaging unit.
Figure 2 shows the side compression means.

Figure 1 shows the packaging unit 16 of the inventive apparatus 1 to produce sugar cubes. In this apparatus 1, sugar and water are supplied in the usual way to a press, in which the sugar and the water are mixed and in which the sugar cubes are pressed into the correct shape, size and weight. From the press, the sugar cubes are conveyed by transportation means 2 to the heating apparatus. The transportation means 2 conveys the wet sugar cubes 4 through a drying chamber, where the sugar cubes 4 are heated, for example by microwave energy, to a temperature of approximately 75 °C and most of the humidity in the sugar cubes 4 is evaporated. Thus, the sugar cubes 4 absorb enough latent energy to arrive at the desired final humidity content in a conditioning apparatus. After the sugar cubes have been conveyed through the conditioning apparatus 4, they are conveyed to a packaging unit 16 by the transportation means 2, where the sugar cubes are packed in packages, for example boxes or the like. The press, the transportation means 2 and the packaging apparatus are electrically driven in the known manner, the drives being adapted, synchronized to one another.

The pick-up unit 16 comprises at least one, here five sugar cube pick-up means 3, which are, in the present case, connected to each other. These sugar cube pick-up means 3 pick-up a multitude of rows of sugar cubes. During one cycle, the sugar cube pick-up means 3 pick up the sugar cubes, transport them to one or more packages, unload the sugar cubes to the packages and come back to pick up the next rows of sugar cubes. Thus, the pick-up takes place intermittently. As soon as the sugar cube pick-up means have picked up a certain number of rows of sugar cubes the transportation belt, which operates continuously, pushes the rows of sugar cubes not yet being picked up forward until they hit a mechanical stop 7 at the front end of transportation belt 2. Here, the rows of sugar cubes are, if needed, compressed, so that there is no or little space between the rows of sugar cubes which are ready for being picked up. According to the present invention, the inventive apparatus comprises retention means 5, here a bar 5, which is place above the row of sugar cubes 4', which is the first row not being picked up during the respective cycle. As can be particularly seen in figures 1 a and 1b, this retention means is shiftable vertically. Figure 1 a shows the situation right before rows 4, here twelve rows 4, are being picked up. The sugar cubes pick-up means are already placed above the sugar cubes and vacuum is already applied or will soon be applied to the sugar cubes in rows 4, so that they are attached to the pick-up means 3. Right before the sugar cube pick-up means lift the sugar cubes from the belt, the retention means 5 is lowered so that it is placed in the intermediate vicinity or touch the top surface of the sugar cubes. Right before or during the lift off of the sugar cube pick-up means, the mechanical stop 7 is rotated counter clockwise by a drive 8, so that the sugar cubes can be removed from belt tube without interference with the mechanical stop 8. After the sugar cubes have been lifted off, the retention means 5 is lifted and the mechanical stop is rotated clockwise into its stop position. The transportation means 2, which operate continuously, move the rows of sugar cubes not being picked up forward until they hit the mechanical stop. Then the cycle starts again.

Figure 2 shows side compression means 9, which are utilized to compress the rows 4 of sugar cubes in their extension perpendicular to their transportation direction. In the present case, the side compression means are bars which are rotatably beared in a bearing 15 and which can be moved together or apart by an electrical motor 10 which rotates in the present case an excenter 11 around a rotational axis 12. The side compression means 9 on the left hand side is connected via a rod 13 to the excenter, while the side compression means 9 on the right hand side is connected, via a rod 14, to a ring 17 which is located at the circumference of the excenter. The excenter 11 drives the ring 17. As soon as the excenter rotates, it moves the left hand side compression means 9 in one direction, while the ring 17, driven by the excenter, moves the other side compression means 9 in the opposite direction.

The drive of the retention means 5, the mechanical stop 7 and the side compression means 9 are, according to the present invention, electrical motors, preferably servo motors, which are connected to the control system of the inventive apparatus. Thus, these motors and the motion of the respective part can be synchronized and/or controlled very exactly. These servo motors always give a feedback signal to the control system so that the control system knows their exact position, respectively.

| **List of reference signs:** | |
|---|---|
| 1 | apparatus to produce sugar cubes |
| 2 | transportation means, transportation belt |
| 3 | sugar cubes pick-up means, gripper |
| 4 | sugar cube, row of sugar cubes |
| 4' | first row of sugar cubes not being picked up during a cycle |
| 5 | retention means |
| 6 | Lifting means for the retention means |
| 7 | Mechanical stop |
| 8 | Drive, rotational drive |
| 9 | Side compression means |
| 10 | Motor, electrical drive |
| 11 | Excenter |
| 12 | Axis of rotation |
| 13 | Connecting rod |
| 14 | Connecting rod |
| 15 | Bearing for rods 13, 14 |
| 16 | Packaging unit |
| 17 | ring |

## Claims

1. Sugar cube production apparatus (1) comprising:
- a press for shaping a sugar mass in sugar cubes (4),
- a heating apparatus for heating and dehumidifying the sugar cubes (4),
- transportation means (2) for transporting the sugar cubes (4) from the press to the heating apparatus and from the heating apparatus to a packaging unit (16), which comprises at least one sugar cubes pick-up means (3), which intermittently picks up an array of sugar cubes, removes it from the transportation means (2) and places it into a package,
**characterized in, that** the packaging unit comprises retention means (5) placed in the vicinity of the first row of sugar cubes (4') not being picked up during the respective cycle.

2. Apparatus (1) according to claim 1, **characterized in, that** the retention means (5) are placed above the first row of sugar cubes (4') not being picked up during the respective cycle.

3. Apparatus (1) according to claim 1, **characterized in, that** the retention means (5) is shiftable vertically, preferably by a motor, more preferably by a servo motor.

4. Apparatus (1) according to one of the preceding claims, **characterized in, that** it comprises a mechanical stop (7) against which the rows (4) of sugar cubes are pushed by the transportation means (2), which is displaced before and/or during the pick-up of the sugar cubes (4) by the pick-up means (3), whereas the mechanical stop (7) is driven by a motor, preferably a servo motor.

5. Apparatus (1) according to one of the preceding claims, **characterized in, that** it comprises side compression means (9) which compact each row (4) of sugar cubes, whereas the means (9) are driven by a motor, preferably by a servo motor.

6. Apparatus (1) according to claim 5, **characterized in, that** two compression means (9) are driven by one motor.

7. Apparatus (1) according to claim 6, **characterized in, that** the motor drives an excenter (11)..

## Patentansprüche

1. Zuckerwürfelherstellungsvorrichtung (1), die Folgendes umfasst:
- eine Presse zum Formen einer Zuckermasse zu Zuckerwürfeln (4),
- eine Erhitzungsvorrichtung zur Erhitzung und Entfeuchtung der Zuckerwürfel (4),
- ein Transportmittel (2) für den Transport der Zuckerwürfel (4) von der Presse zu der Erhitzungsvorrichtung und von der Erhitzungsvorrichtung zu einer Verpackungseinheit (16), die mindestens ein Zuckerwürfelaufnahmemittel (3) umfasst, das eine Anordnung von Zuckerwürfeln intermittierend aufnimmt, sie von dem Transportmittel (2) herunternimmt und in eine Verpackung platziert,
**dadurch gekennzeichnet, dass** die Verpackungseinheit ein Zurückhaltemittel (5) umfasst, das in der Nähe der ersten Reihe von Zuckerwürfeln (4') platziert wird, die während des jeweiligen Zyklus nicht aufgenommen werden.

2. Vorrichtung (1) nach Anspruch 1, **dadurch gekennzeichnet, dass** das Zurückhaltemittel (5) über der ersten Reihe von Zuckerwürfeln (4') platziert wird, die während des jeweiligen Zyklus nicht aufgenommen werden.

3. Vorrichtung (1) nach Anspruch 1, **dadurch gekennzeichnet, dass** das Zurückhaltemittel (5) vorzugsweise durch einen Motor, besonders bevorzugt durch einen Servomotor, vertikal verschiebbar ist.

4. Vorrichtung (1) nach einem der vorhergehenden Ansprüche, **dadurch gekennzeichnet, dass** sie einen mechanischen Anschlag (7) umfasst, gegen den die Reihen (4) von Zuckerwürfeln durch das Transportmittel (2) gedrückt werden, das vor und/oder während der Aufnahme der Zuckerwürfel (4) durch das Aufnahmemittel (3) bewegt wird, während der mechanische Anschlag (7) durch einen Motor, vorzugsweise einen Servomotor, angetrieben wird.

5. Vorrichtung (1) nach einem der vorhergehenden Ansprüche, **dadurch gekennzeichnet, dass** sie Seitenkompressionsmittel (9) umfasst, die jede Reihe (4) von Zuckerwürfeln komprimieren, während die Mittel (9) durch einen Motor, vorzugsweise einen Servomotor, angetrieben werden.

6. Vorrichtung (1) nach Anspruch 5, **dadurch gekennzeichnet, dass** zwei Kompressionsmittel (9) durch einen Motor angetrieben werden.

7. Vorrichtung (1) nach Anspruch 6, **dadurch gekennzeichnet, dass** der Motor einen Exzenter (11) antreibt.

## Revendications

1. Appareil de production de sucre en morceaux (1), comprenant :
- une presse pour former une composition de sucre en morceaux de sucre (4),
- un appareil de chauffage pour chauffer et déshumidifier les morceaux de sucre (4),
- un moyen de transport (2) pour transporter les morceaux de sucre (4) de la presse à l'appareil de chauffage et de l'appareil de chauffage à une unité d'emballage (16), qui comprend au moins un moyen de préhension (3) des morceaux de sucre, qui prend, de manière intermittente, un ensemble de morceaux de sucre, le retire du moyen de transport (2) et le place dans un emballage,
**caractérisé en ce que** l'unité d'emballage comprend un moyen de retenue (5) placé à proximité de la première rangée de morceaux de sucre (4') qui n'a pas été prise au cours du cycle respectif.

2. Appareil (1) selon la revendication 1, **caractérisé en ce que** le moyen de retenue (5) est placé au-dessus de la première rangée de morceaux de sucre (4') qui n'a pas été prise au cours du cycle respectif.

3. Appareil (1) selon la revendication 1, **caractérisé en ce que** le moyen de retenue (5) est déplaçable verticalement, de préférence par un moteur, plus préférablement par un servomoteur.

4. Appareil (1) selon l'une quelconque des revendications précédentes, **caractérisé en ce qu'**il comprend une butée mécanique (7) contre laquelle les rangées (4) de morceaux de sucre sont poussées par le moyen de transport (2), qui est déplacé avant et/ou pendant la prise des morceaux de sucre (4) par le moyen de préhension (3), tandis que la butée mécanique (7) est entraînée par un moteur, de préférence un servomoteur.

5. Appareil (1) selon l'une quelconque des revendications précédentes, **caractérisé en ce qu'**il comprend des moyens de compression latéraux (9) qui compriment chaque rangée (4) de morceaux de sucre, tandis que les moyens (9) sont entraînés par un moteur, de préférence un servomoteur.

6. Appareil (1) selon la revendication 5, **caractérisé en ce que** deux moyens de compression (9) sont entraînés par un moteur.

7. Appareil (1) selon la revendication 6, **caractérisé en ce que** le moteur entraîne un excentrique (11).
